# EUROPEAN PATENT SPECIFICATION

(11) **EP 4 038 358 B1**
(45) Date of publication and mention of the grant of the patent: **10.04.2024**
(21) Application number: 20781531.7
(22) Date of filing: 29.09.2020
(51) Int. Cl.: G01M 3/22, G01M 3/20

(54) **FLUID EVACUATION APPARATUS**
VORRICHTUNG ZUM ENTLEEREN VON FLÜSSIGKEITEN
APPAREIL D'ÉVACUATION DE FLUIDE

(30) Priority: 02.10.2019 GB 201914246
(43) Date of publication of application: 10.08.2022
(73) Proprietor: Vacuum Engineering Services Ltd., Manchester M32 0ZE (GB)
(72) Inventor: RICHARDSON, David, Conway, Manchester M32 0ZE (GB); SANSBY, Luke, Manchester M32 0ZE (GB); WATSON, John, Manchester M32 0ZE (GB); MICHAEL, Daniel, Manchester M32 0ZE (GB)
(74) Representative: Marks & Clerk LLP
(86) International application number: PCT/EP2020/077271
(87) International publication number: WO 2021/063971

(56) References cited:
- JP-A- S60 222 741
- US-A- 3 721 117
- US-A- 4 055 984
- US-A- 4 593 554
- US-A1- 2004 159 144
- US-A1- 2018 087 997
- US-A1- 2019 145 852

## Description

### Field of Invention

The present invention relates to a fluid evacuation apparatus and to an apparatus for leak testing a component.

### Background

Components which, in use, will contain liquid or gas and cannot be permitted to leak may be subject to leak testing in order to assess the integrity of the components.

Components from a large variety of applications may be subject to leak testing, for example refrigeration and air conditioning equipment and automotive parts, such as gasoline tanks.

Helium leak testing is one method of detecting small leaks. Conventional helium leak testing involves placing a component to be leak tested in a metallic chamber, sealing the chamber and subsequently evacuating a chamber volume defined by the chamber such that it is at a reduced pressure. The component is then charged with helium and a mass spectrometer, in fluid communication with the chamber volume, is used to determine if helium is leaking out of the component and into the chamber volume. The mass spectrometer may also be used to measure the flow rate of helium out of the component. It is also possible to test components in reverse, i.e. to charge the chamber volume with helium and evacuate an internal volume of the component to be tested such that it is at a reduced pressure.

US4055984A discloses a device adapted to detecting leaks in an article having readily deformable walls has conventional arrangements for performing a leak detection by overpressure or by vacuum and has a deformable backup wall for engagement with the walls of the article. The backup wall is, on its face oriented towards the article, so configured that between the backup wall and the article there is obtained a coherent fluid tight space which may be evacuated.

US3721117A discloses a method of detecting leaks in a wheel assembly including a rim and a pneumatic tire comprising the steps of inflating the tire with a mixture of air and an added probe gas, establishing a chamber enclosing at least the rim and an adjacent annular region of the tire, and then, after a period of time, testing the atmosphere in the chamber for the presence of such a probe gas. An apparatus for detecting leaks in a pneumatic wheel assembly including a rim and a pneumatic tire mounted on the rim and inflated with a mixture of air and an added probe gas, the apparatus including impermeable means for circumferentially sealably engaging at least the side wall portions of such a tire to define a chamber enclosing such a rim and an adjacent region of such a tire, and a detector for the probe gas arranged to extend into such a chamber.

US4593554A discloses a method and an apparatus for detecting a possible leak in a vacuum package, in which the vacuum package is received within a wrapping wall at least essentially consisting of a gas-tight, flexible wrapping foil adapted for substantial adjustment to the contours of the vacuum package under the influence of overpressure, so that the vacuum package is tightly enveloped by the wrapping wall. Overpressure is applied to the wrapping foil such that this adjustment to the contours of the vacuum package is effected without sealing any leak present, ensuring that the pressure exteriorly of the vacuum package remains higher than the pressure within said vacuum package. Hermetic sealing from the outside air is effected in the residual space remaining between the vacuum package and the wrapping wall during a predetermined detection period, the pressure being gauged in function of the time.

JPS60222741A discloses a device for detecting the leakage of stored liquefied gas from a double-shell low temperature inner casing shell having an inner tank as a low temperature liquefied gas storage space and a space between the inner and outer tank as a cold storage layer. At least a part of the outer surface of the inner tank is sectioned. A membrane covers each section and periphery of the membrane is adhered to the outer surface of the inner tank. A gas leakage detection instrument for detecting gas leakage is provided in each section.

US2019145852A1 discloses a method for leak detection of a test specimen that includes providing an evacuable film test chamber which is operatively coupled to a pressure measuring device, and at least one processor operatively coupled to the pressure measuring device; measuring a pressure within the evacuable film test chamber by the pressure measuring device at predetermined times during a measurement period of time; calculating by the processor, a first or higher order derivative of a pressure change with respect to time at a first predetermined time, and a first or higher order derivative of a pressure change with respect to time at least at a second predetermined time during the measurement period of time, to provide at least a pair of derivative values; and categorizing by the processor a leaky or tight state of the specimen under test by a pattern recognition process based on the pair of derivative values.

US 2018/087997 A1 discloses a bag including a first envelope having at least one fill and/or discharge orifice for a biopharmaceutical fluid and a fill and/or discharge tube associated in a fluid tight manner with the fill and/or discharge orifice, a second envelope within which the first envelope is located, and a spacer element, wherein the spacer element is porous as a result either of an arrangement resulting in porosity, or the use of one or more porous materials.

It is an object of the present invention obviate, or at least mitigate, one or more disadvantages present in the prior art.

### Summary of Invention

According to a first aspect of the invention there is provided a fluid evacuation apparatus according to claim 1.

Known helium leak testing apparatus typically comprise large chambers which are large enough to accommodate the component to be tested. The apparatus is typically cuboid and so 'free volume' is present in the apparatus when a component is received in it. Vacuum pumps, valves and pipework, provided as part of the apparatus, are required to have a high capacity in order to provide a desirable level of vacuum in the chamber volume. This results in high capital cost, a large apparatus footprint and high running costs. For a typical component, the evacuation time may be around 25% of the total test time. This incurs further running costs and limits the test output of the machine, i.e. the number of tests performed by the apparatus per hour.

In this document, the term 'polymeric membrane' may be understood as meaning a sheet of polymeric material which forms a barrier between the chamber volume and the surrounding environment.

Throughout this document, the terms 'polymeric membrane' and 'membrane' are used interchangeably.

It will be appreciated that polymeric membrane is intended to mean a membrane formed from a polymer. It will be further appreciated that, as used herein, polymers are intended to include at least: thermosetting plastics, thermoplastics and elastomers.

The assembly that is received on the platform may include a single component or may include multiple components.

Advantageously, providing a polymeric membrane allows the shape of the internal surface of the polymeric membrane to be more easily formed so as to be generally complimentary to the compound shape of the at least one component. For example, if the polymer from which the membrane is made is a thermoplastic, the shape of the internal surface of the polymeric membrane can be formed by heating a sheet of thermoplastic and forming it over the at least one component. The polymeric membrane may be formed using vacuum forming. As a result, the shape of the internal surface of the polymeric membrane will be generally complimentary to the compound shape of the at least one component. Advantageously, vacuum forming is an efficient, cost effective method of manufacturing the cover such that it has a shape complimentary to the shape of the component. Similarly, if the polymer from which the membrane is made is an elastomer, the elastomer can be manufactured such that the shape of the internal surface of the polymeric membrane will be generally complimentary to the compound shape of the at least one component (for example in its equilibrium, undistorted state).

In this document, "complementary to the shape of the compound shape of the at least one component" may be understood as meaning that the shape of the internal surface of the polymeric membrane generally matches the profile of the at least one component.

The shape of the internal surface of the cover being complimentary to the compound shape of the at least one component provides a chamber of reduced chamber volume in comparison to conventional fluid evacuation apparatus. Chambers of conventional fluid evacuation apparatus are generally box shaped and therefore comprise 'free volume'. Free volume in conventional fluid evacuation apparatus arises due to the difference in shape between the component and the chamber of the apparatus. The reduction of free volume reduces the amount of fluid which needs to be evacuated from the chamber volume. This in turn reduces the component (i.e. pumps, valves and pipework) capacity requirements which reduces the capital cost and footprint of the fluid evacuation apparatus in comparison to known fluid evacuation apparatus. For example, the present invention can provide a significant reduction in required pump capacity, e.g. one pump instead of three. Furthermore, the present invention provides reduced evacuation time, and therefore running costs, compared to known fluid apparatus.

Conventional fluid evacuation apparatus are designed so as to be suitable for receiving a particular component and the chamber of the fluid evacuation apparatus is sized such that each of the internal width, length and height of the chamber is greater than or equal to the component to be received within the chamber. This means that a given fluid evacuation apparatus cannot be used, for example, with a slightly larger component. An entirely new fluid evacuation apparatus is needed with a larger chamber. This requires large capital cost and is time consuming to replace. The present invention provides a cover which comprises a polymeric membrane which defines the chamber and can be easily made to suit the at least one component being placed in the chamber. This therefore allows the present apparatus to be used for a variety of different component sizes and shapes. This may be particularly useful should a component be subject to design changes that alter the dimensions of the component. It is not necessary to manufacture a new chamber in its entirety, only to replace the polymeric membrane.

The sealing engagement of the cover with the platform prevents influx of the fluid surrounding the cover into the chamber volume.

According to the invention, the fluid evacuation apparatus comprises a permeable spacer configured to prevent contact between the at least one component and the polymeric membrane.

The provision of a permeable spacer advantageously inhibits the blocking of leak paths. The polymeric membrane can form a seal with the component during evacuation. This can prevent the flow of fluid within the chamber volume. This may be known as leak path blocking. This may be particularly prevalent with irregularly shaped components, however it can occur with components of any shape. Blocking of a leak path is undesirable as it inhibits the flow of fluid within the chamber volume. In use, the fluid evacuation apparatus may form part of a leak testing apparatus for detecting whether the at least one component has a leak. Blocking of a leak path may inhibit the flow of fluid within the chamber volume, which may prevent a leak from being detected. Advantageously, by providing a permeable spacer between the component and the cover, the likelihood of blocking of a leak path is significantly reduced. The permeable spacer is provided so as to ensure that separation is maintained between at least a portion of the cover and the component. Since the spacer is permeable, space is provided through which fluid can flow.

According to the invention, the permeable spacer comprises a mesh structure that is formed of wires that are intertwined to form a structure of repeating polygons or a foam structure.

The shape of the internal surface of the polymeric membrane may be complementary to the compound shape of the at least one component.

The at least one component may comprise at least one shield. The shield can be configured to prevent contact between the polymeric membrane and at least one region of the at least one component.

It has been found that when the chamber volume is in an evacuated state, the cover can exert a pressure on the at least one component. Advantageously, the provision of at least one shield prevents contact between the cover and regions of the at least one component protected by the shield. This avoids damage to the shielded region(s) whilst a vacuum is formed in the chamber volume. The provision of at least one shield may be particularly useful for components which comprise regions that may be more susceptible to damage, for example fragile coil pipes, connectors, valves or any other fragile component.

The thickness of the polymeric membrane may be less or equal to than 3mm. The thickness of the polymeric membrane may be less than or equal to 2mm. The thickness of the polymeric membrane may be less than or equal to 1mm.

Typically, in existing fluid evacuation apparatus the body of the evacuated chamber is formed from a rigid, metal material such that it does not deform when the chamber is evacuated. However, by forming a cover from a polymeric membrane, the cover may be formed so that the shape of the internal surface of the polymeric membrane is complementary to the compound shape of the at least one component. The inventors of the present invention have realized that with such an arrangement, the at least one component supports the membrane and limits deformation of the membrane such that, advantageously, a thinner polymeric membrane can be used.

As the thickness of the polymeric membrane decreases it may become more flexible. It may be desirable for the thickness of the polymeric membrane to be as small as practicable. Advantageously, a polymeric membrane of the above thicknesses may be sufficiently flexible so as to be drawn towards the at least one component upon activation of the pump. Therefore, the at least one component supports the membrane and inhibits, or limits, deformation of the membrane. In addition, the above thicknesses advantageously limit the distance from the neutral axis of the membrane to the surface of the membrane, therefore reducing the bending stress that the membrane is subjected to. Reducing the bending stress advantageously prevents the formation of fatigue cracks in the membrane.

The cover may further comprise a frame adjacent a portion of the cover. The frame can be configured to sealingly engage the platform.

The frame may provide a flange around the polymeric membrane for engaging the platform. The frame may be formed from a more rigid material and may act to provide support for the cover (for example when the cover is not sealingly engaged with the platform).

The frame may comprise a first member and a second member. The polymeric membrane can be sandwiched between the first member and the second member.

The first member may comprise a first channel which can receive a first seal element and a second channel which can receive a second seal element. The first seal element and the second seal element may be configured to prevent the influx of fluid from the surrounding environment into the chamber volume.

The platform may comprise a seal element.

The seal element can be configured to form a seal with the platform and with a frame of the cover. The seal can be configured to form a seal with the platform and with the polymeric membrane.

Advantageously, this seal element forms a seal with the platform and with the polymeric membrane and prevents the influx of fluid into the chamber volume during evacuation and while the pump is active.

The polymeric membrane can comprise a synthetic polymer.

According to the second aspect of the invention there is provided a leak testing apparatus for detecting whether a component which comprises an internal cavity has a leak. The leak testing apparatus comprising the fluid evacuation apparatus of the first aspect of the invention. The leak testing apparatus further comprising a chemical analyser in fluid communication with the chamber volume and a fluid source configured to be in fluid communication with the internal cavity of the component and further configured to provide a fluid to the internal cavity of the component.

In this document, 'chemical analyser' can be taken to mean any device capable of detecting the presence of the fluid of the fluid source.

The polymeric membrane may be impermeable to the fluid of the fluid source.

The internal surface of the polymeric membrane can provided with a coating which is impermeable to the tracer gas. The coating can be one of graphene or PVDC. Polyvinylidene chloride may be referred to as PVDC.

According to a third aspect of the invention there is provided a method for leak testing a component having an internal cavity, the method using a fluid evacuation apparatus which comprises a platform, a cover and a pump; the method comprising: placing the component on the platform; providing the cover, which comprises a polymeric membrane, over the component such that the polymeric membrane sealingly engages the platform, thereby forming a chamber which defines a chamber volume; pumping fluid from the chamber volume using the pump; preventing contact between the component and the polymeric membrane using a permeable spacer, the spacer comprising a mesh structure that is formed of wires that are intertwined to form a structure of repeating polygons or a foam structure; charging the internal cavity of the component with a fluid; and detecting the presence of the fluid in the chamber volume using a chemical analyser.

As noted above, providing a polymeric membrane allows the membrane to be formed such that the internal surface of the membrane is generally complementary to the compound shape of the component.

The internal surface of the polymeric membrane may be generally complementary to the compound shape of the component.

Providing the cover can comprise forming a polymeric membrane having an internal surface that is generally complementary to the compound shape of the component.

Forming the polymeric membrane may comprise providing a polymeric membrane having an initial shape; heating the polymeric membrane to a forming temperature; and pressing the polymeric membrane onto the component.

The forming temperature may be a glass transition temperature of the material from which the polymeric material is formed.

Forming the polymeric membrane can comprise vacuum forming.

The fluid may be helium.

The chemical analyser may comprise a mass spectrometer configured to determine the rate at which the fluid is leaking out of the component.

The cover may comprise a spacer which is provided between the polymeric membrane and the test apparatus. The spacer may be configured to prevent contact between the test apparatus and the polymeric membrane.

The test apparatus may further comprise a shield. The shield may be configured to prevent contact between the polymeric membrane and at least one region of the component.

It will be appreciated that embodiments described with respect to one of the aspects of the invention may also be embodiments of the other aspects of the invention.

### Brief Description of the Drawings

Embodiments of the present invention will now be described, by way of example only, with reference to the accompanying Figures, in which:
Figure 1 schematically depicts in cross-section a fluid evacuation apparatus according to an embodiment of the invention and an enlarged cross-section of part of the apparatus;
Figure 2 is a perspective view of part of a fluid evacuation apparatus according to an embodiment of the invention;
Figure 3 schematically depicts in cross-section a fluid evacuation apparatus comprising a shield according to a modified embodiment of the invention;
Figure 4 depicts an enlarged cross-sectional view of a frame of an embodiment of the present invention;
Figure 5 depicts an exploded cross-sectional view of the frame of Figure 4;
Figure 6 schematically depicts in cross-section a fluid evacuation apparatus comprising a filler according to a modified embodiment, which is not part of the present invention defined in the claims;
Figure 7 schematically depicts in cross-section a leak testing apparatus according to an embodiment of the present invention; and
Figure 8 schematically depicts in cross-section a leak testing apparatus comprising a shield according to a modified embodiment of the invention.

### Detailed Description

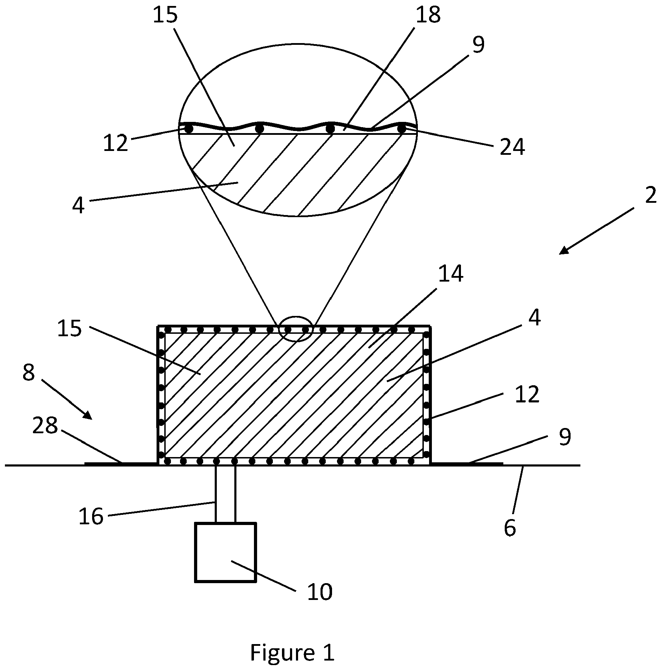

A fluid evacuation apparatus 2 for receiving a component 4 is shown in Figure 1. The fluid evacuation apparatus 2 comprises a platform 6, a cover 8 and a pump 10. The fluid evacuation apparatus comprises a permeable spacer 12. As can be seen in Figure 1, the cover 8 is located over the component 4, thereby defining a chamber 14 which defines a chamber volume 15. In other words, the chamber 14 is defined by at least part of the platform 6 and at least part of the cover 8. The permeable spacer 12 can also be located beneath the component 4. In other words, the permeable spacer 12 can be located between the component 4 and the platform 6. Therefore, the permeable spacer 12 can prevent the component 4 from coming into direct contact with the platform 6. The platform 6 comprises a conduit 16 such that the inlet of the pump 10 is in fluid communication with the chamber volume 15. The fluid evacuation apparatus 2 is suitable for removing fluid from the chamber volume 15 such that a vacuum is formed in the chamber volume 15. Throughout this document, 'vacuum' should not only be taken to mean a volume completely devoid of matter, but should also be taken to mean a volume or space at a significantly reduced pressure relative to the surrounding environment. Typically, the level of vacuum provided will be determined by the accuracy at which it is desired or required to test a particular component 4. For example, in some implementations, a pressure of around 8 mBar could be considered to be a vacuum. However, higher or lower pressures may also be considered to be a vacuum.

The platform 6 may be a single, planar surface, or alternatively it may be any other surface suitable for placing the component 4 on whilst still allowing a vacuum to be formed in the chamber volume 15. For example, the platform 6 may comprise a planar surface comprising a plurality of projections projecting from the planar surface on which the component 4 can rest.

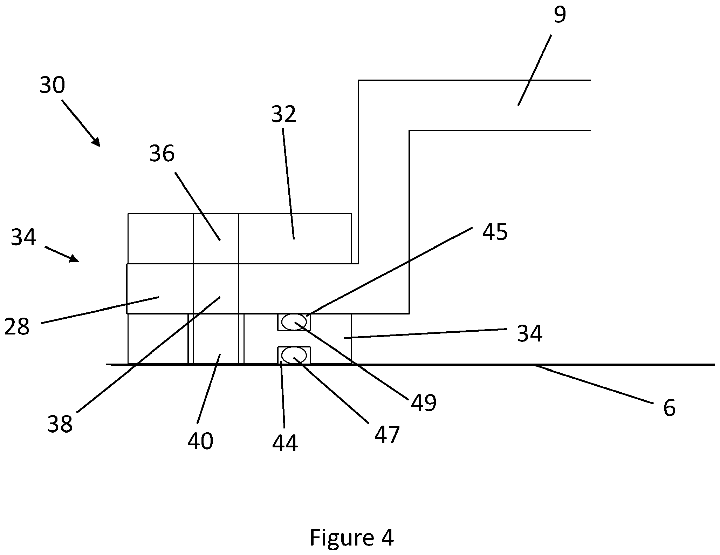

The cover 8 comprises a membrane 9. The membrane 9 is formed from a polymer. Advantageously, the membrane 9 being formed from a polymer allows the membrane 9 to be easily shaped such that the shape of the membrane 9 is complimentary to the shape of the component 4. As can be seen in Figure 1, at least part of the shape of the membrane 9 is complementary to the shape of the component 4. It will be appreciated that, although in Figure 4 the component 4 is shown as having a generally rectangular cross-section, in practice components to be tested within the fluid evacuation apparatus 2 may have irregular shapes. There may be components other than the component 4 placed on the platform 6. If other components are placed on the platform 6, the shape of the membrane 9 can be complimentary to the compound shape of the components. If the shape of the membrane 9 is complementary to the shape of the component 4, or to the compound shape of the components, the shape of the chamber 14 can be complementary to the shape of the component, or to the compound shape of the components. By shaping the membrane 9 such that its shape is complementary to that of the component 4, the free volume of the chamber 14 is reduced in comparison to the chambers of known fluid evacuation apparatuses.

"Complementary to the shape of the component" may be understood as meaning that the profile of the membrane 9 is generally matched to the profile of the component 4. It will be appreciated that multiple components may be provided on the platform 6, in which case the membrane 9 can be complimentary to the compound shape of the components. In addition, as noted above, it will be appreciated that `at least part of the shape of the membrane 9 is complementary to the shape of the component 4' includes membranes which comprise an internal surface (i.e. the surface of the cover which faces the chamber volume), at least part of which is complementary to the compound shape of the component, and comprise an external surface (i.e. the surface of the cover which faces the environment) at least part of which is not complementary to the shape of the component. However, the external surface may also be complementary to the shape of the component.

Use of a polymeric membrane 9 to define the chamber 14 allows efficient, cost effective manufacture and easy handling of the polymeric membrane. The polymeric membrane 9 may, for example, be formed from high-density polyethylene (HOPE) or polyethylene terephthalate (PET). The polymeric membrane 9 should be formed from a polymer which is capable of withstanding a significantly reduced pressure. In other words, when the pump 10 is active and the chamber volume 15 is at reduced pressure, the polymeric membrane 9 should not allow the fluid from the surrounding environment to permeate through the polymeric membrane and in to the chamber volume 15. The surface of the cover 8 which, in use, is internal can be provided with a coating. The coating may be, for example, graphene or polyvinylidene chloride (PVDC). The provision of a coating can advantageously improve the ability of the membrane 9 to prevent the permeation of fluid from the surrounding environment into the chamber volume 15. The shape of the polymeric membrane 9 may be achieved through any suitable means. For example, if the polymeric membrane is formed from a thermoplastic, the shape of the polymeric membrane can be achieved via vacuum forming. However, it is conceived that other means, such as injection moulding, compression moulding or extrusion blow moulding may be used. The vacuum forming process for shaping the cover 8 is described in more detail below.

The membrane 9 can be any suitable thickness. The membrane 9 can be less than or equal to 3 mm thick. The membrane 9 can be less than or equal to 2 mm thick. The membrane 9 can be less than or equal to 1 mm thick. The membrane 9 can be flexible. The thickness of the membrane 9 will, at least in part, contribute to the degree of flexibility of the membrane. Other factors which can influence the flexibility of the membrane 9 include the material selection and the geometry of the membrane. If the membrane 9 is flexible, activation of the pump 10 draws the membrane 9 towards the component. If the membrane 9 is sufficiently flexible, the membrane is drawn into contact with the permeable spacer 12. Therefore, in this case, the component 4 provides support for the membrane 9 and prevents the membrane 9 from collapsing.

Typically, in existing fluid evacuation apparatus the body of the evacuated chamber is formed from a rigid, metal material such that it does not deform when the chamber is evacuated. However, by forming a cover 8 from a polymeric membrane, the cover 8 may be formed so that the shape of the internal surface of the polymeric membrane 9 is complementary to the compound shape of the component(s) supported by the platform 6. The inventors of the present invention have realized that with such an arrangement, said components support the membrane and limits deformation of the membrane 9 such that, advantageously, a thinner polymeric membrane 9 can be used.

An outer periphery of the membrane 9 is by formed by a flange portion 28 which extends substantially parallel to the platform 6 when the cover has been located on the component 4. There may be surface contact between the flange portion 28 and the platform 6. The flange portion 28 should be sized such that the flange portion 28 can form a seal with the cover.

The pump 10 is configured to remove the fluid present in the chamber volume 15 in order to form a vacuum. Upon activation of the pump 10, fluid is drawn from the chamber volume 15. The fluid may be pumped to an external volume (not shown).

Once the pump 10 begins drawing air out of the chamber volume 15, the flange portion 28 is urged into the platform 6 by virtue of the pressure differential between the chamber volume 15 and the surrounding atmosphere. As a result, the membrane 9 sealingly engages the platform 6, thereby preventing influx of the fluid surrounding the fluid evacuation apparatus 2 into the chamber volume 15.

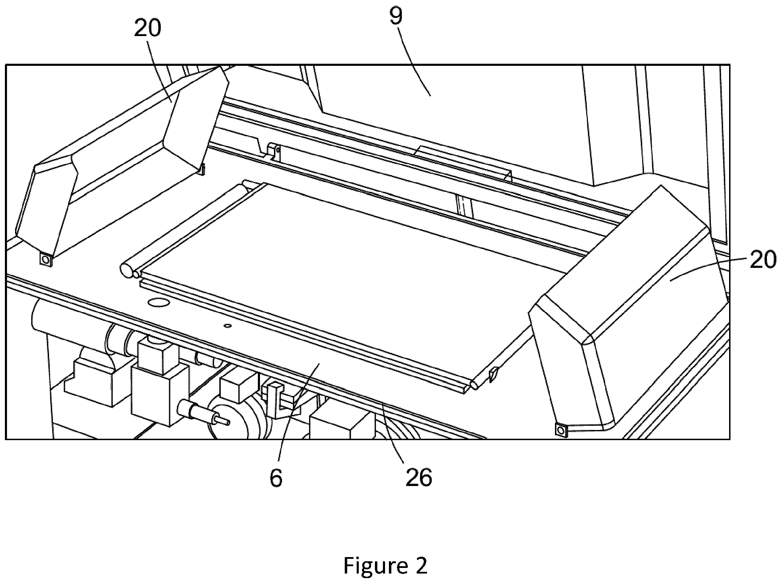

In order to aid the sealing effect between the platform 6 and the membrane 9, the platform may comprise a channel (not visible) which receives a seal 26, this arrangement is shown in Figure 2. The seal 26 is configured to form a seal with the platform 6 and with the membrane 9 to prevent the influx of the fluid surrounding the cover into the chamber volume 15. Alternatively or additionally, the periphery of the flange portion 28 of the membrane 9 can be formed with a channel which receives a seal (not shown). This seal also forms a seal with the platform 6 and with the membrane 9. The membrane 9 is capable, dependent upon material selection, to form a seal with the platform 6 in the absence of the seal 26 or the seal of the membrane. Therefore, it will be appreciated that these seals need not be provided.

Alternatively or additionally to the seal 26, the fluid evacuation apparatus may further comprise a clamping device (not shown). The clamping device can urge the membrane 9 into contact with the platform 6. Therefore, the clamping device aids the sealing effect between the platform 6 and the membrane 9. The clamping device may be, for example, a toggle clamp, a pneumatic cylinder, or any other device capable of urging the membrane 9 into engagement with the platform 6.

The permeable spacer 12 prevents the membrane 9 from forming a seal with the component 4 whilst the pump 10 is active. Should the membrane 9 form a seal with the component 4, the flow of fluid within the chamber volume 15 could be inhibited, and may prevent removal of the fluid from the chamber volume. This could prevent the formation of a vacuum inside the chamber volume 15, and may be referred to as leak path blocking. This may be particularly prevalent with irregularly shaped components, however it may occur with components of any shape. In a non-depicted embodiment, the portion of the permeable spacer 12 which separates the component 4 and the platform 6 can be integrally formed with the platform. For example, the platform 6 can be provided with a series of grooves. Fluid can flow within the grooves, therefore allowing removal of the fluid from the chamber volume.

The enlarged view of Figure 1 shows an enlarged cross-sectional view of the surface of the component 4. In the Figure, the permeable spacer 12 is located between the component 4 and the membrane 9 and between the component 4 and the platform 6. The permeable spacer 12 comprises a mesh structure formed of wires 24 that are intertwined, so as to form a structure of repeating polygons. Advantageously, by intertwining the wires 24 a gap (not visible in the figure) is provided between the intertwined wires and the component through which fluid can flow.

Whilst the pump 10 is active, the pressure differential between the chamber volume 15 and the surrounding atmosphere causes the membrane 9 to be drawn towards the component 4. Hence, in the regions between the wires 24, the membrane 9 is drawn towards the component 4. However, due to the stiffness of the membrane 9, the diameter of the wires 24 and the dimensions of the polygons formed by the wires, the membrane is not able to contact the component and therefore cannot form a seal with the component 4. This allows leak paths 18 to be provided and therefore ensures that fluid is able to flow within the chamber volume 15.

In the depicted embodiment, the permeable spacer 12 has been depicted as a mesh structure. Alternatively, a foam structure can be used. If a foam structure is used, it may be sufficiently dense such that the pressure exerted by the membrane 9 on the foam structure does not compress the foam to the extent that fluid cannot flow through it when the pump 10 is active. Additionally, the density of the foam structure may be sufficiently low such that fluid can flow through it, regardless of whether or not the pump 10 is active.

When a vacuum is established in the chamber volume 15, the membrane 9 exerts a pressure on the component 4. If a permeable spacer 12 is provided, the pressure is exerted via the permeable spacer 12. This pressure is due to the pressure differential between the chamber volume 15 and the surrounding atmosphere. In use, the pressure inside the chamber volume 15 can be reduced to around 8 mBar. Therefore, the maximum pressure exerted on the component is the pressure of the surrounding atmosphere less 8 mBar. It may be desirable to prevent contact between the permeable spacer 12 and/or membrane 9 and certain areas of the component 4, for example areas of the component that may break or be damaged if they are subjected to said pressure.

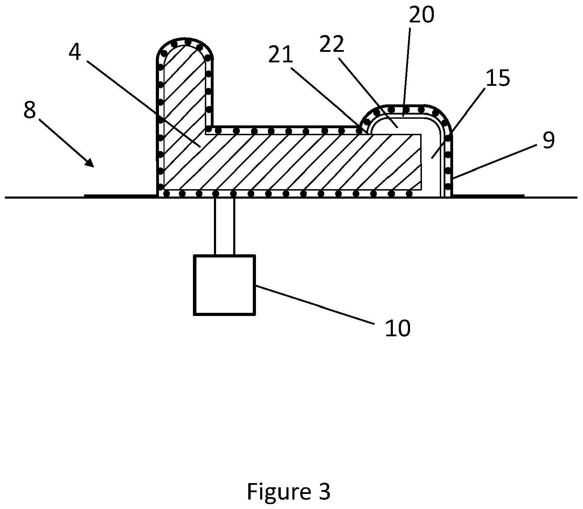

Figure 3 shows a modified embodiment of the invention in which the fluid evacuation apparatus 2 is provided with a shield 20. The shield 20 is configured to prevent pressure from being exerted by the membrane 9 on chosen areas 22 of the component 4. The shield 20 may be present during manufacture of the membrane 9 (e.g. during the vacuum forming process) thereby allowing the shape of the membrane to be complementary to a compound shape of the shield 20 and the component 4. Alternatively, the shape of the membrane 9 can be designed so as to account for the shield 20. However, it will be appreciated that the shield 20 is not necessarily provided during vacuum forming of the cover.

Although a single shield 20 is depicted, any number of shields can be provided so as to prevent pressure being exerted on a plurality of areas 22 of the component 4 by the membrane 9. Additionally, although the shield 20 is depicted as contacting the component 4, the shield 20 does not necessarily do so. There may be a small gap between an edge 21 of the shield 20 and the component 4.

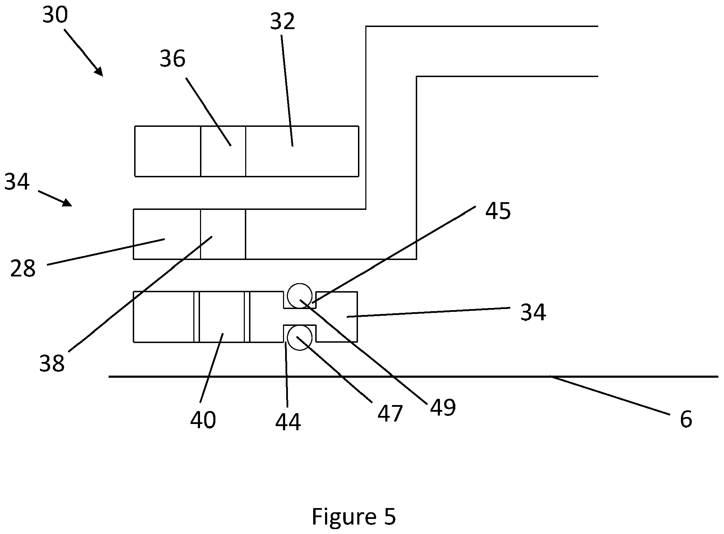

The cover 8 may further comprise a frame 30, which is depicted in Figures 4 and 5. The frame 30 may be provided adjacent a portion of the cover 8 that is configured to sealingly engage the platform (for example, the flange portion 28 of the membrane 9). The frame 30 may provide a flange around the polymeric membrane 9 for engaging the platform 6. Additionally or alternatively, the frame 30 may support a flange portion 28 of polymeric membrane 9, which is for engaging the platform 6. The frame 30 may be formed from a more rigid material than the membrane 9 and may act to provide support for the cover 8 (for example when the cover 8 is not sealingly engaged with the platform).

The frame 30 may be provided to improve the user friendliness of the fluid evacuation apparatus 2 by making the cover 8 easier to handle. This may also result in reduced apparatus set up time. The frame 30 may be rotatably connected to the platform 6, e.g. by virtue of a hinge. Alternatively, the frame 30 may be affixed to vertically extending rods (not shown), on which the frame 30 can translate. The frame 30 may be formed from any suitable material, but is preferably metal, e.g. steel.

In the depicted embodiment, the frame 30 comprises an upper half 32 and a lower half 34. The upper half 32 and the lower half 34 receive the membrane 9 such that the flange portion 28 of the membrane 9 is sandwiched between the upper half 32 and the lower half 34. The lower half 32 of the frame 34 may be configured to form a seal with the seal 26 of the platform (i.e. instead of the flange portion 28 of the membrane 9 forming a seal with the seal 26). The upper half 32 of the frame 30 comprises a plurality of apertures 36. The flange portion 28 of the membrane 9 comprises a plurality of apertures 38. The lower half 34 of the frame 30 comprises a plurality of threaded apertures 40. Alternatively, the lower half 34 of the frame 30 can comprise a plurality of threaded blind bores (not depicted). Although only a single aperture is depicted, it will be appreciated that there are further apertures spaced about the perimeter of the frame 30 and cover 8. The position of the apertures 36, 38, 40 corresponds to one another such that a fastener (not shown), e.g. a bolt, may be received by an aperture 36 of the upper half 32 of the frame 30, an aperture 38 of the flange 28 and then threaded into a threaded aperture 40 of the lower half 34 of the frame 30. In this way, the fasteners may be used to clamp the upper half 32 of the frame 30, the flange portion 28 of the membrane 9 and the lower half 34 of the frame 30 together.

The upper half 32 of the frame 30 may comprise a channel (not shown). The channel may receive a seal which is configured to form a seal with the upper half 32 of the frame 30 and with the flange 28 of the membrane 9. This seal may be provided to define a region of contact between the upper half 32 of the frame 30 and the membrane 9 (via the seal).

The lower half 34 of the frame 30 may also comprise channels 44, 45 which extend around the lower half and are configured to receive respective seals 47, 49. When assembled, channel 44 is located adjacent to the platform 6 and channel 45 is located adjacent to the membrane 9. The channel 44 and seal 47 may be provided in addition to, or as an alternative to the seal 26 of the platform 6. The seal 47 is configured to form a seal with the lower half 34 and with the platform 6. The seal 49 is configured to form a seal with the lower half 34 and with the flange 28 of the membrane 9. Therefore, the seals 47, 49 prevent the influx of fluid from an external volume into the chamber volume 15. Although the channels 44, 45 have been depicted as being equidistant from the inner periphery of the frame 30, the channels 44, 45 may be spaced different distances from the inner periphery of the frame such that the seals 47, 49 are staggered.

The apertures 36, 38, 40 may also be positioned such that a minimum distance from the apertures 36, 38, 40 to the chamber volume 15 is greater than a distance from the channels 44, 45 to the chamber volume 15.

Other means to prevent the influx of fluid into the chamber volume 15 may be used. For example, a surface of the lower half 34 of the frame 30 which, in use, contacts the platform 6, and a surface of the lower half 34 of the frame 30 which, in use contacts the flange portion 28 of the membrane 9 may be coated with rubber, e.g. by vulcanisation.

The sealing effect provided by the seals 47, 49 may be enhanced through the use of a clamping device (not shown). The clamping device may be operable to urge the frame 30 towards the platform 6. In practice, the sealing effect can be achieved without the use of a clamping device, the cover 8 is simply drawn towards the platform by virtue of the pressure differential between the chamber volume 15 and the environmental pressure. However, the provision of a clamping device can aid the sealing effect. The clamping device may for example be a toggle clamp or a pneumatic cylinder.

In an alternative embodiment, not depicted, the cover 8 may comprise a frame comprising a single member. In use, the single member is positioned on top of the periphery of the membrane 9 (i.e. above the flange portion 28 of the membrane 9). The single member may be urged towards the platform by a clamping device to allow the membrane 9 to form a better seal with the platform 6. For example, the single member may be urged towards the platform through the use of a clamping device e.g. a pneumatic cylinder or toggle clamp. There may also be provided a seal positioned between the single member and the platform 6. The seal may form a seal with the platform 6 and with the cover 8. The seal may be positioned so as to be effected by the force provided by the clamping device. The seal may be provided to define a region of contact between the frame and the membrane 9.

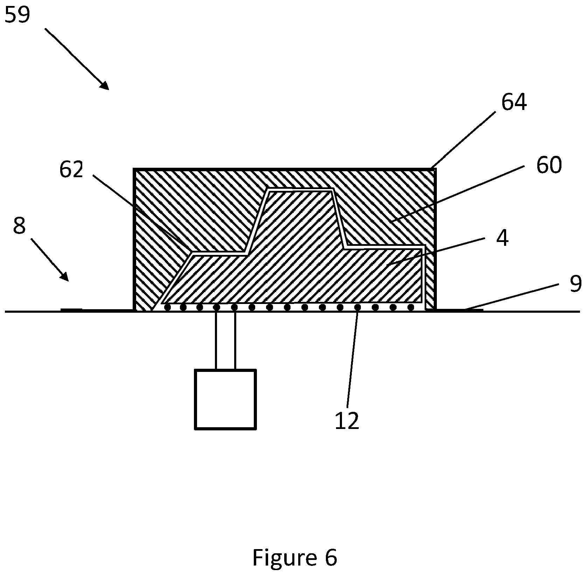

A further modified embodiment of a fluid evacuation apparatus 59 is shown in Figure 6. This embodiment is not part of the present invention defined in the claims.

In this embodiment, the cover 8 further comprises a filler 60. The filler 60 is positioned between the component 4 and the membrane 9. At least part of the shape of the interior 62 of the filler 60 is complementary to at least part of the shape of the component 4. At least part of the external surface 64 of the filler 60 is complementary to an internal surface of the membrane 9 (but may be not complementary to the shape of the component 4). However, in an alternative, non-depicted embodiment, the external surface 64 of the filler 60 may be complementary to at least part of the shape of the component 4. The filler 60 may, for example, be made of epoxy or polyacetal. However, it will be appreciated that other materials may also be suitable.

The filler 60 may be particularly effective for use with components which have an uneven surface that, in the absence of the filler, would need to be matched by the membrane 9. For example, a component may include a sharp drop in height which separates two regions. It can be difficult to form the membrane to be complimentary to such geometries. Therefore, the interior surface 62 of the filler 60 can fill in the free volume provided by virtue of such geometries. In other words, at least part of the external surface 64 of the filler 60 is not complementary to the shape of the component 4 and the external surface of the filler 60 provides a geometry which is able to be more accurately formed compared to the surface of the component which would be required to be formed in the absence of the filler 60.

The filler 60 can engage the platform 6. A clearance can be provided between the filler 60 and the component 4. Therefore, upon activation of the pump 10, the filler 60 bears the load of the membrane 9 which results due to the pressure differential between the surrounding environment and the chamber volume 15.

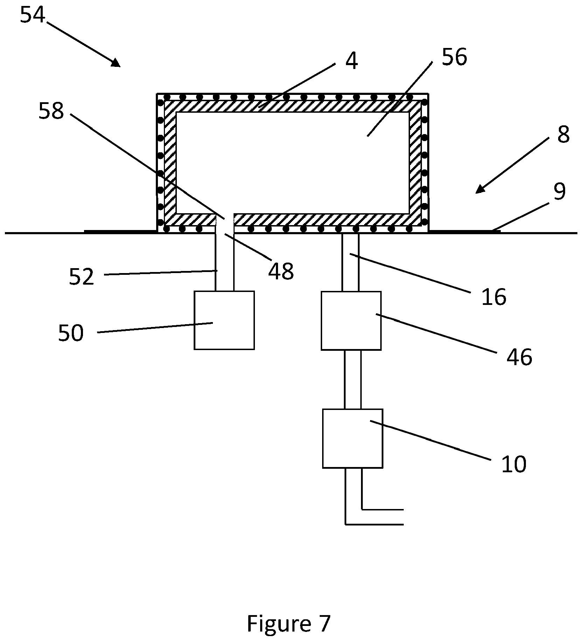

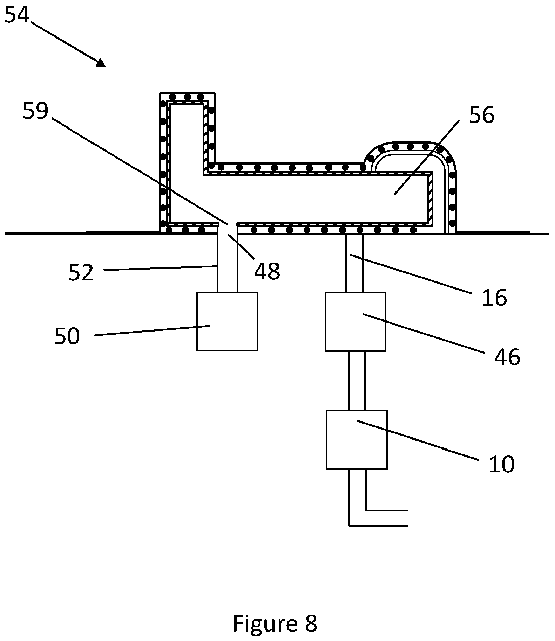

In a further embodiment, as depicted in Figures 7 and 8, the fluid evacuation apparatus 2 may form part of a leak testing apparatus 54. The leak testing apparatus 54 comprises the features of the fluid evacuation apparatus 2 in any combination and further comprises a mass spectrometer 46, a fluid outlet 48, a fluid source 50 and a second conduit 52. The leak testing apparatus 54 is suitable for use with hollow components, or components having an internal cavity of any kind, As such, the component 4 of this embodiment comprises an internal cavity 56. The fluid source 50 is configured to be in fluid communication with the internal cavity 56 of the component 4. The fluid source 50 is further configured to provide a fluid to the internal cavity 56 of the component 4. In order to fluidly communicate the fluid source 50 with the internal cavity 56, the component 4 comprises an aperture 58. The fluid provided to the internal cavity 56 of the component can be referred to as the 'tracer fluid'.

The internal cavity 56 of the component 4 (via the aperture 58), the fluid outlet 48, the second conduit 52 and the fluid source 50 are all in fluid communication. The fluid outlet 48 is sealed to the aperture 58 of the component 4 to ensure that the fluid does not leak directly into a part of the chamber volume 15 between the component 4 and the cover 8. This allows the internal cavity 56 of the component 4 to be charged with the fluid. The fluid may be helium. It will be appreciated that other fluids can be used, for example water, hydrogen or argon. It will be appreciated that the tracer fluid may be provided to the internal cavity 56 of the component 4 via a conduit, or multiple conduits, that extend into the chamber 14. In which case, the compound shape that the membrane 9 can be formed to be complimentary to may include the shape of portions of the conduits which extend above the platform 6.

The pump 10, the conduit 16 and the mass spectrometer 46 are in fluid communication. The mass spectrometer 46 is operable to detect an amount of tracer fluid passing through conduit 16. In this way, the mass spectrometer 46 is able to detect if tracer fluid is passing from the internal cavity 56 of the component 4 into the chamber volume 15, which is indicative of a leak.

As discussed above, leak testing apparatus is used to assess the integrity of components as a form of quality assessment. In order to leak test the component 4, the permeable spacer 12 and the component 4 are placed on the platform 6. The shield(s) 20, if required, are then positioned appropriately, the permeable spacer is then wrapped around the component and the membrane 9 and spacer are positioned over the component.

In one embodiment, a cover 8 may be provided as a single component that is movable relative to the platform 6. The process of loading a component into the leak testing apparatus for testing may comprise: placing the component 4 on the platform 6 and, subsequently, moving the single cover 6 so as to cover the component, engage with the platform 6 and so form the chamber volume 15. In such embodiments, the cover comprises the polymeric membrane 9 and may optionally comprise: a frame 30, a permeable spacer 12. Shields 20, if provided may connected to the platform 6 (for example via a hinge). In such embodiments, the process of loading a component into the leak testing apparatus for testing may comprise: placing the component 4 on the platform 6; covering one or more parts of the component 4 with one or more shields 20; and, subsequently, moving the single cover 6 so as to cover the component (and shields 20), engage with the platform 6 and so form the chamber volume 15.

Once the chamber volume 15 has been formed, the pump 10 is activated and begins to draw fluid out of the chamber volume 15 to an external volume (not shown), via the mass spectrometer 46. The pump 10 remains active once a vacuum has been formed. The internal cavity 56 of the component 4 is then charged with the tracer fluid. As discussed above, the surface of the membrane 9 which, in use, is internal, can be provided with a coating. The coating can reduce the permeability of the cover 8. The coating can be selected such that it is impermeable to the tracer gas being used. Therefore, the provision of a coating can aid the prevention of the passage of the tracer fluid through the cover 8. Any fluid leaking out of the internal cavity 56, and into a surrounding part of the chamber volume 15, will be drawn out of the chamber volume 15 via the conduit 16 by the pump 10 and detected by the mass spectrometer 46. Due to the small molecule size of helium, it is able to pass through cracks and leak sites that other, larger, gases would not be able to. This makes helium a highly effective gas to use for detecting leaks. Additionally, helium is inert and so does not react with the component being tested. In this embodiment, the membrane 9 should be made of a material which is impervious to the fluid which is provided to the internal cavity.

In an alternative embodiment, not shown, the leak testing apparatus is operated in reverse. That is to say, the pump and the mass spectrometer are in fluid communication with the internal cavity of the component, and the chamber volume formed by the cover and the platform is in fluid communication with a fluid source. A vacuum may therefore be formed in the internal cavity of the component. The chamber volume is charged with the fluid, e.g. helium. This configuration allows any fluid leaking from the chamber volume into the internal cavity of the component to be detected by the mass spectrometer. A component may be tested in reverse if it suits the application of the component. For example, a component which in use is required to prevent the influx of fluid into an internal cavity may be tested in this reverse configuration.

The membrane 9 can be manufactured via vacuum forming. In which case the polymer from which the membrane is made may be a thermoplastic. Vacuum forming involves heating a blank sheet of a desired material such that its temperature is equal to or above the glass transition temperature of the material, forming a mould into the sheet and simultaneously forming a vacuum in the region defined between the sheet and the mould. In order to vacuum form the cover 8, either a mould of the required shape can be prepared or the component 4 can be used. If shield(s) 20 are required, they can be positioned to prevent contact between the membrane 9 and appropriate regions of the component 4, as discussed above. The permeable spacer 12 is preferably not provided during manufacture of the cover. However, in some applications, the permeable spacer 12 may be provided during manufacture of the cover.

Vacuum forming is a quick, cost effective process and so it is possible to manufacture covers for a range of components. Therefore, a single fluid evacuation apparatus can be used to test a range of components whilst providing low evacuation times, when compared to known fluid evacuation apparatuses.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A fluid evacuation apparatus (2) comprising:
a platform (6) which is configured to receive at least one component (4);
a cover (8) comprising a polymeric membrane (9), the cover configured to be placed over the at least one component and configured to sealingly engage the platform, thereby forming a chamber (14) which defines a chamber volume (15);
a pump (10) connected to the chamber volume and configured to pump fluid out of the chamber volume; and
a permeable spacer (12) configured to prevent contact between the at least one component and the polymeric membrane;
**characterized in that** the permeable spacer comprises a mesh structure that is formed of wires that are intertwined to form a structure of repeating polygons or a foam structure.

2. The fluid evacuation apparatus of any preceding claim, wherein the at least one component comprises at least one shield (20), the shield configured to prevent contact between the polymeric membrane and at least one region of the at least one component.

3. The fluid evacuation apparatus of any preceding claim, wherein the cover further comprises a filler (60) which engages the platform and is located between the at least one component and the polymeric membrane, the filler configured to engage the platform and to provide separation between the polymeric membrane and the at least one component.

4. A leak testing apparatus (54) for detecting whether a component (4) which comprises an internal cavity (56) has a leak, the leak testing apparatus comprising:
the fluid evacuation apparatus (2) of claims 1 to 3;
a chemical analyser in fluid communication with the chamber volume; and
a fluid source (50) configured to be in fluid communication with the internal cavity of the component and further configured to provide a fluid to the internal cavity of the component.

5. The leak testing apparatus of claim 4, wherein the polymeric membrane is impermeable to the fluid of the fluid source.

6. The leak testing apparatus of claim 4 or claim 5, wherein the internal surface of the polymeric membrane is provided with a coating which is impermeable to the tracer gas; wherein optionally, the coating is one of graphene or PVDC.

7. A method for leak testing a component (4) having an internal cavity (56), the method using a fluid evacuation apparatus which comprises a platform (6), a cover (8) and a pump (10); the method comprising:
placing the component (4) on the platform (6);
providing the cover (8), which comprises a polymeric membrane (9), over the component such that the polymeric membrane (9) sealingly engages the platform (6), thereby forming a chamber (14) which defines a chamber volume (15);
pumping fluid from the chamber volume using the pump (10);
preventing contact between the component and the polymeric membrane using a permeable spacer (12), the spacer comprising a mesh structure that is formed of wires that are intertwined to form a structure of repeating polygons or a foam structure;
charging the internal cavity of the component with a fluid; and
detecting the presence of the fluid in the chamber volume using a chemical analyser.

8. The method of claim 7, wherein the internal surface of the polymeric membrane is generally complementary to the compound shape of the component.

9. The method of claim 7 or claim 8, wherein providing the cover comprises forming a polymeric membrane having an internal surface that is generally complementary to the compound shape of the component.

10. The method of claim 9, wherein forming the polymeric membrane comprises:
providing a polymeric membrane having an initial shape;
heating the polymeric membrane to a forming temperature; and
pressing the polymeric membrane onto the component.

11. The method of any of claims 7 to 10, wherein the chemical analyser comprises a mass spectrometer (46) configured to determine the rate at which the fluid is leaking out of the component.

12. The method of any of claims 7 to 11, wherein the method further comprises using a shield (20) to prevent contact between the polymeric membrane and at least one region of the component.

## Patentansprüche

1. Fluidentleerungsvorrichtung (2), die Folgendes umfasst:
eine Plattform (6), die dafür konfiguriert ist, mindestens eine Komponente (4) aufzunehmen;
eine Abdeckung (8), die eine Polymermembran (9) umfasst, wobei die Abdeckung dafür konfiguriert ist, über der mindestens einen Komponente platziert zu werden, und dafür konfiguriert ist, die Plattform abdichtend in Eingriff zu nehmen, wodurch eine Kammer (14) geformt wird, die ein Kammervolumen (15) definiert;
eine Pumpe (10), die mit dem Kammervolumen verbunden und dafür konfiguriert ist, Fluid aus dem Kammervolumen zu pumpen; und
einen durchlässigen Abstandshalter (12), der dafür konfiguriert ist, eine Berührung zwischen der mindestens einen Komponente und der Polymermembran zu verhindern;
**dadurch gekennzeichnet, dass**
der durchlässige Abstandshalter eine Netzstruktur, die aus Drähten geformt ist, die verflochten sind, um eine Struktur von sich wiederholenden Vielecken zu formen, oder eine Schaumstruktur umfasst.

2. Fluidentleerungsvorrichtung nach einem der vorhergehenden Ansprüche, wobei die mindestens eine Komponente mindestens einen Schutz (20) umfasst, wobei der Schutz dafür konfiguriert ist, eine Berührung zwischen der Polymermembran und mindestens einem Bereich der mindestens einen Komponente zu verhindern.

3. Fluidentleerungsvorrichtung nach einem der vorhergehenden Ansprüche, wobei die Abdeckung ferner einen Füllstoff (60) umfasst, der die Plattform in Eingriff nimmt und sich zwischen der mindestens einen Komponente und der Polymermembran befindet, wobei der Füllstoff dafür konfiguriert ist, die Plattform in Eingriff zu nehmen und eine Trennung zwischen der Polymermembran und der mindestens einen Komponente bereitzustellen.

4. Leckprüfvorrichtung (54) zum Erkennen, ob eine Komponente (4), die einen inneren Hohlraum (56) umfasst, ein Leck aufweist, wobei die Leckprüfvorrichtung Folgendes umfasst:
die Fluidentleerungsvorrichtung (2) nach den Ansprüchen 1 bis 3;
einen chemischen Analysator in Fluidverbindung mit dem Kammervolumen; und
eine Fluidquelle (50), die dafür konfiguriert ist, in Fluidverbindung mit dem inneren Hohlraum der Komponente zu stehen, und ferner dafür konfiguriert ist, dem inneren Hohlraum der Komponente ein Fluid bereitzustellen.

5. Leckprüfvorrichtung nach Anspruch 4, wobei die Polymermembran für das Fluid der Fluidquelle undurchlässig ist.

6. Leckprüfvorrichtung nach Anspruch 4 oder Anspruch 5, wobei die Innenfläche der Polymermembran mit einer Beschichtung versehen ist, die für das Spürgas undurchlässig ist, wobei wahlweise die Beschichtung eines von Graphen oder PVDC ist.

7. Verfahren zum Leckprüfen einer Komponente (4), die einen inneren Hohlraum (56) aufweist, wobei das Verfahren eine Fluidentleerungsvorrichtung verwendet, die eine Plattform (6), eine Abdeckung (8) und eine Pumpe (10) umfasst, wobei das Verfahren Folgendes umfasst:
Platzieren der Komponente (4) auf der Plattform (6);
Bereitstellen der Abdeckung (8), die eine Polymermembran (9) umfasst, über der Komponente derart, dass die Polymermembran (9) die Plattform (6) abdichtend in Eingriff nimmt, wodurch eine Kammer (14) geformt wird, die ein Kammervolumen (15) definiert;
Pumpen von Fluid aus dem Kammervolumen unter Verwendung der Pumpe (10);
Verhindern einer Berührung zwischen der Komponente und der Polymermembran unter Verwendung eines durchlässigen Abstandshalters (12), wobei der Abstandshalter eine Netzstruktur, die aus Drähten geformt ist, die verflochten sind, um eine Struktur von sich wiederholenden Vielecken zu formen, oder eine Schaumstruktur umfasst,
Beschicken des inneren Hohlraums der Komponente mit einem Fluid; und
Erkennen des Vorhandenseins des Fluids in dem Kammervolumen unter Verwendung eines chemischen Analysators.

8. Verfahren nach Anspruch 7, wobei die Innenfläche der Polymermembran im Allgemeinen komplementär zu der zusammengesetzten Form der Komponente ist.

9. Verfahren nach Anspruch 7 oder Anspruch 8, wobei das Bereitstellen der Abdeckung das Formen einer Polymermembran umfasst, die eine Innenfläche aufweist, die im Allgemeinen komplementär zu der zusammengesetzten Form der Komponente ist.

10. Verfahren nach Anspruch 9, wobei das Formen der Polymermembran Folgendes umfasst:
Bereitstellen einer Polymermembran, die eine anfängliche Form aufweist,
Erwärmen der Polymermembran auf eine Formtemperatur; und
Pressen der Polymermembran auf die Komponente.

11. Verfahren nach einem der Ansprüche 7 bis 10, wobei der chemische Analysator ein Massenspektrometer (46) umfasst, das dafür konfiguriert ist, die Geschwindigkeit zu bestimmen, mit der das Fluid aus der Komponente austritt.

12. Verfahren nach einem der Ansprüche 7 bis 11, wobei das Verfahren ferner das Verwenden eines Schutzes (20) umfasst, um eine Berührung zwischen der Polymermembran und mindestens einem Bereich der Komponente zu verhindern.

## Revendications

1. Appareil d'évacuation de fluide (2), comprenant :
une plate-forme (6) qui est configurée pour recevoir au moins un composant (4) ;
un couvercle (8) comprenant une membrane polymère (9), le couvercle étant configuré pour être placé au-dessus de l'au moins un composant et configuré pour s'engager de manière étanche dans la plate-forme, pour former ainsi une chambre (14) qui définit un volume de chambre (15) ;
une pompe (10) connectée au volume de chambre et configurée pour pomper du fluide hors du volume de chambre ; et
un espaceur perméable (12) configuré pour empêcher un contact entre l'au moins un composant et la membrane polymère ;
**caractérisé en ce que**
l'espaceur perméable comprend une structure maillée qui est formée de fils qui sont entrelacés pour former une structure de polygones répétitifs ou une structure en mousse.

2. Appareil d'évacuation de fluide selon l'une quelconque des revendications précédentes, dans lequel l'au moins un composant comprend au moins un écran (20), l'écran étant configuré pour empêcher un contact entre la membrane polymère et au moins une région de l'au moins un composant.

3. Appareil d'évacuation de fluide selon l'une quelconque des revendications précédentes, dans lequel le couvercle comprend en outre une charge (60) qui s'engage dans la plate-forme et est située entre l'au moins un composant et la membrane polymère, la charge étant configurée pour s'engager dans la plate-forme et pour assurer une séparation entre la membrane polymère et l'au moins un composant.

4. Appareil de test de fuite (54) pour détecter si un composant (4) qui comprend une cavité interne (56) présente ou ne présente pas une fuite, l'appareil de test de fuite comprenant :
l'appareil d'évacuation de fluide (2) selon les revendications 1 à 3 ;
un analyseur chimique en communication fluidique avec le volume de chambre ; et
une source de fluide (50) configurée pour être en communication fluidique avec la cavité interne du composant et configurée en outre pour fournir un fluide à la cavité interne du composant.

5. Appareil de test de fuite selon la revendication 4, dans lequel la membrane polymère est imperméable au fluide de la source de fluide.

6. Appareil de test de fuite selon la revendication 4 ou la revendication 5, dans lequel la surface interne de la membrane polymère est dotée d'un revêtement qui est imperméable au gaz traceur ; dans lequel, optionnellement, le revêtement est un parmi du graphène ou du PVDC.

7. Procédé pour tester les fuites d'un composant (4) comportant une cavité interne (56), le procédé utilisant un appareil d'évacuation de fluide qui comprend une plate-forme (6), un couvercle (8) et une pompe (10), le procédé comprenant :
la mise en place du composant (4) sur la plate-forme (6) ;
la fourniture du couvercle (8), qui comprend une membrane polymère (9), au-dessus du composant, de sorte que la membrane polymère (9) s'engage de manière étanche dans la plate-forme (6), formant ainsi une chambre (14) qui définit un volume de chambre (15) ;
le pompage de fluide à partir du volume de chambre à l'aide de la pompe (10) ;
l'empêchement d'un contact entre le composant et la membrane polymère à l'aide d'un espaceur perméable (12), l'espaceur comprenant une structure maillée qui est formée de fils qui sont entrelacés pour former une structure de polygones répétitifs ou une structure en mousse ;
le chargement de la cavité interne du composant avec un fluide ; et
la détection de la présence du fluide dans le volume de chambre à l'aide d'un analyseur chimique.

8. Procédé selon la revendication 7, dans lequel la surface interne de la membrane polymère est généralement complémentaire de la forme composée du composant.

9. Procédé selon la revendication 7 ou la revendication 8, dans lequel la fourniture du couvercle comprend la formation d'une membrane polymère comportant une surface interne qui est généralement complémentaire de la forme composée du composant.

10. Procédé selon la revendication 9, dans lequel la formation de la membrane polymère comprend :
la fourniture d'une membrane polymère ayant une forme initiale ;
le chauffage de la membrane polymère à une température de formage ; et
la pression de la membrane polymère sur le composant.

11. Procédé selon l'une quelconque des revendications 7 à 10, dans lequel l'analyseur chimique comprend un spectromètre de masse (46) configuré pour déterminer la vitesse à laquelle le fluide s'échappe du composant.

12. Procédé selon l'une quelconque des revendications 7 à 11, dans lequel le procédé comprend en outre l'utilisation d'un écran (20) pour empêcher un contact entre la membrane polymère et au moins une région du composant.
